# EUROPÄISCHE PATENTANMELDUNG

(11) **EP 0 556 423 A1**
(43) Veröffentlichungstag der Anmeldung: **25.08.1993**
(21) Anmeldenummer: 92102719.9
(22) Anmeldetag: 19.02.1992
(51) Int. Cl.: H02K 9/14, H02K 9/06

(54) **Elektromotor**

(71) Anmelder: ABUS Kransysteme GmbH & Co. KG., D-51647 Gummersbach (DE)
(72) Erfinder: Bube, Eckhard, Dipl.-Ing., W-5270 Gummersbach (DE); Bühne, Werner, Dipl.-Ing., W-5270 Gummersbach (DE)
(74) Vertreter: Dörner, Lothar, Dipl.-Ing.

(57) **Zusammenfassung**

Der Elektromotor weist ein Motorgehäuse (6, 7), einen durch die Motorwelle (11) angetriebenen, mit Lüfterflügeln (3) versehenen Lüfter und eine Lüfterhaube (1) auf. Die Lüfterhaube (1) ist im Bereich der Lüfterflügel (3) geschlossen. Die Lüfterhaube (1) ist über das gesamte Motorgehäuse (6, 7) verlängert. In der Lüfterhaube ist eine axiale Öffnung (2) zum Ansaugen von Kühlluft vorgesehen, die geringen Durchmesser aufweist. Die Lüfterflügel (3) sind durch nur einen geringen Luftspalt von der Lüfterhaube (1) getrennt, ihr eng benachbart angeordnet.

## Beschreibung

### Technisches Gebiet:

Die Erfindung betrifft einen Elektromotor mit einem Motorgehäuse, mit einem durch die Motorwelle angetriebenen, Lüfterflügel aufweisenden Lüfter und mit einer geschlossenen Lüfterhaube im Bereich der Lüfterflügel.

### Stand der Technik:

Bei bekannten Elektromotoren, insbesondere bei solchen, die als Hubmotoren und Fahrantriebsmotoren für Krane und Hebezeuge verwendet werden, wird durch einen Lüfter/ein Lüfterrad, der/das auf der Motorwelle angeordnet ist, z.B. bei den Kranen und Hebezeugen hinter einer Bremse, Kühlluft zu in Längsrichtung verlaufenden Kühlrippen am Motorgehäuse befördert. Durch Luftöffnungen in dem Motorgehäuse zieht der Lüfter die Kühlluft an und drückt sie durch die Lüfterhaube nach dem Motorblock bzw. an der Bremse vorbei. Bei dem aus DE 24 11 532 B2 bekannten Elektromotor ist die Lüfterhaube nur bis zu einem Maschinenkörper geführt. Im Bereich des Maschinenkörpers besorgen röhrenförmige Teile am Umfang des Motors die Lüftung. Auch bei den aus DE 33 21 444 C2 und DE 34 23 319 A1 bekannten Elektromotoren schließt die Lüfterhaube an den Maschinenkörper an. Die Lüfterhaube weist hier in ihrer Längsachse eine verhältnismäßig große Öffnung auf.

### Darstellung der Erfindung:

Aufgabe der Erfindung ist es, bei einem Elektromotor der eingangs genannten Art das Volumen sowie die Strömungsrichtung der Kühlluft zu optimieren und die Lüftergeräusche zu minimieren, dabei die Anordnung so zu treffen, daß sie im Prinzip bei jedem derzeit bekannten Elektromotor verwendet werden kann. Gemäß der Erfindung wird die Aufgabe dadurch gelöst, daß die Lüfterhaube über das gesamte Motorgehäuse verlängert ist, in der Lüfterhaube eine axiale Öffnung zum Ansaugen von Kühlluft vorgesehen ist, die geringen Durchmesser aufweist, und die Lüfterflügel durch nur einen geringen Luftspalt von der Lüfterhaube getrennt, ihr eng benachbart angeordnet sind.

Bei der Erfindung ist im Bereich der Lüfterflügel keine Haubenöffnung vorgesehen. Vielmehr liegen die Lüfterflügel eng an der geschlossenen Lüfterhaube an, natürlich ohne sie zu berühren. Dadurch wird erreicht, daß die Kühlluft mit größerem Volumen schnell über die Lüfterflügel gezogen und zur Seite weggedrückt wird. Die Luft wird in Richtung der Kühlrippen gedrückt und über die gesamte Motorlänge geführt. Der Motor-Wirkungsgrad wird verbessert. Die Lüftergeräusche sind gering. Der nachträgliche Anbau des Lüftergehäuses mit Lüfter an einen vorhandenen Elektromotor ist möglich.

In Ausgestaltung der Erfindung ist entweder die Öffnung in der Achse der Lüfterhaube Bestandteil einer trichterförmigen Öffnung oder Bestandteil einer trompetenförmigen Öffnung. Beide Ausgestaltungen verbessern zusätzlich die Führung des Luftvolumens.

### Kurze Beschreibung der Zeichnung:

Ein Ausführungsbeispiel der Erfindung ist in der Zeichnung dargestellt und wird nachfolgend im einzelnen beschrieben. Es zeigen:

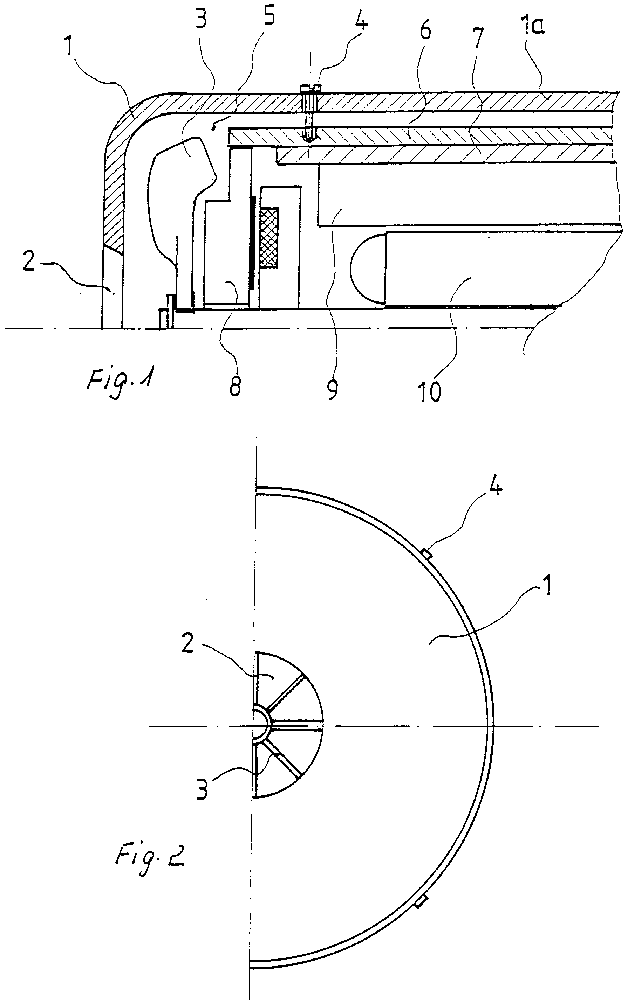

- Fig. 1: einen Teil eines Elektromotors im Axialschnitt;
- Fig. 2: einen Teil des in Fig. 1 dargestellten Elektromotors in Stirnansicht.

### Bester Weg zur Ausführung der Erfindung:

Der als Ausführungsbeispiel gewählte Elektromotor weist eine Lüfterhaube 1 auf. Die Lüfterhaube 1 geht in Axialrichtung über in eine Verlängerung 1a. Lüfterhaube 1 mit Verlängerung 1a sind über das gesamte Motorgehäuse verlängert. Die Lüfterhaube 1 weist an ihrer Stirnseite in der Symmetrieachse eine Öffnung 2 zum Ansaugen von Kühlluft auf. Die Öffnung 2 hat geringen Durchmesser. Sie kann Bestandteil einer trichterförmigen oder einer trompetenförmigen Öffnung sein.

Von der Lüfterhaube 1 durch einen geringen Luftspalt getrennt, ihr eng benachbart sind Lüfterflügel 3 eines Lüfters vorgesehen, der von der Motorwelle angetrieben ist.

Der Elektromotor weist einen Motor-Gehäuseblock 7 auf. An dem Gehäuseblock 7 sind Kühlrippen 6 angeordnet. Mit dem Gehäuseblock 7/den Kühlrippen 6 ist die Lüfterhaube 1/die Verlängerung 1a mit Hilfe von Befestigungen 4, die vorzugsweise symmetrisch auf dem Umfang des Elektromotors verteilt sind, befestigt. Zwischen dem Gehäuseblock 7/den Kühlrippen 6 und der Lüfterhaube 1/der Verlängerung 1a sind Kanäle 5 für den Durchgang der Kühlluft zwischen der Lüfterhaube 1/der Verlängerung 1a und dem Gehäuseblock 7/den Kühlrippen 6 vorgesehen. Der Gehäuseblock 7 trägt in bekannter Weise ein Statorpaket 9.

An der Motorwelle befestigt ist ein Rotor 10. In Axialrichtung zwischen dem Rotor 10 und den Lüfterflügeln 3 ist eine Bremse 8 angeordnet, von denen der eine Teil mit der Motorwelle, der andere Teil mit dem Gehäuseblock 7 verbunden ist.

### Gewerbliche Verwertbarkeit:

Die Erfindung ist verwendbar bei allen einen Lüfter aufweisenden Elektromotoren, insbesondere bei solchen, die als Hubmotoren und Fahrantriebsmotoren für Krane und Hebezeuge eingesetzt werden.

## Patentansprüche

1. Elektromotor mit einem Motorgehäuse, mit einem durch die Motorwelle angetriebenen Lüfterflügel aufweisenden Lüfter und mit einer geschlossenen Lüfterhaube im Bereich der Lüfterflügel, dadurch gekennzeichnet, daß die Lüfterhaube (1, 1a) über das gesamte Motorgehäuse (6, 7) verlängert ist, in der Lüfterhaube (1, 1a) eine axiale Öffnung (2) zum Ansaugen von Kühlluft vorgesehen ist, die geringen Durchmesser aufweist, und die Lüfterflügel durch nur einen geringen Luftspalt von der Lüfterhaube (1, 1a) getrennt, ihr eng benachbart angeordnet sind.

2. Elektromotor nach Anspruch 1, dadurch gekennzeichent, daß die Öffnung (2) in der Achse der Lüfterhaube (1) Bestandteil einer trichterförmigen Öffnung ist.

3. Elektromotor nach Anspruch 1, dadurch gekennzeichnet, daß die Öffnung (2) in der Lüfterhaube (1) Bestandteil einer trompetenförmigen Öffnung ist.
